# EUROPÄISCHE PATENTSCHRIFT

(11) **EP 2 852 014 B1**
(45) Veröffentlichungstag und Bekanntmachung des Hinweises auf die Patenterteilung: **06.09.2023**
(21) Anmeldenummer: 13185283.2
(22) Anmeldetag: 20.09.2013
(51) Int. Cl.: H02B 1/044

(54) **Befehls- und Meldegerät mit vertieftem Frontplatteneinbau**
Control and signaling device with recessed front panel installation
Appareil de commande et de signalisation doté d'un montage encastré en façade

(43) Veröffentlichungstag der Anmeldung: 25.03.2015
(73) Patentinhaber: Siemens Aktiengesellschaft, 80333 München (DE)
(72) Erfinder: Baumann, Michael, 92546 Schmidgaden (DE); Bäuml, Alfred, 92421 Schwandorf (DE)
(74) Vertreter: Siemens Patent Attorneys

(56) Entgegenhaltungen:
- EP-A1- 1 168 549
- WO-A1-2012/110274
- DE-A1- 2 306 331
- DE-A1- 3 335 819
- DE-A1- 4 411 904
- DE-A1- 4 411 904
- DE-C1- 4 446 166
- DE-C1- 19 636 706
- FR-A1- 2 442 500
- FR-A7- 2 388 471
- US-A- 4 499 352

## Beschreibung

Die Erfindung betrifft ein Befehls- und Meldegerät mit vertieftem Frontplatteneinbau mit einem Betätiger, welcher einen zylindrischen Grundkörper und einen Druckknopf aufweist, mit einer Frontplatte, durch welche der zylindrische Grundkörper des Betätigers geführt ist und welche bündig mit dem Druccknopf des Betätigers abschließt und mit einem Halter, welcher am zylindrischen Grundkörper des Betätigers befestigt ist.

Diese Befehls- und Meldegeräte werden in Schalttafeln, Bedientableaus, Schaltschranktüren oder Gehäusedecken montiert. Befehlsgeräte sind in der Regel modular aufgebaut, das bedeutet, sie bestehen aus einem Betätiger, einem Befestigungsteil wie zum Beispiel einer Ringmutter oder einem Montagehalter und mehreren Schaltelementen, die als Öffner- oder Schlie-ßerschaltglieder ausgeführt sind. Zur Montage wird der Betätiger in der Regel von vorn durch ein Loch in der Schalttafel geführt und von hinten mittels eines Befestigungsteils montiert. Die Schaltelemente werden mit Schrauben, Schnapphaken oder Riegeln mechanisch am Betätiger oder am Befestigungsteil verbunden. Die elektrische Verbindung der Schaltelemente mit der Steuerung erfolgt über Anschlussklemmen.

Bei Sicherheitsanwendungen, wie zum Beispiel Not-Aus-Befehlsgeräten ist es Vorschrift, dass das Signal durch das Öffnen von zwangsöffnenden Kontakten erzeugt wird. Das heißt, dass bei einem unbetätigten Not-Aus-Befehlsgerät der Kontakt und damit der zugehörige Stromkreis geschlossen sind. Im Störungs- oder Notfall wird durch Schlagen auf den Not-Aus-Betätiger, der sich vor der Schalttafel befindet, der Öffnerkontakt unterbrochen und die Anlage oder Maschine in einem sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Aus-Befehlsgerät nicht mehr funktionsfähig, das heißt, bei einer Betätigung im Notfall werden die Kontakte nicht geöffnet und damit erfolgt auch keine Beseitigung des Gefahrenszustands. Daher kommt der sicheren Verbindung zwischen Betätiger und Schaltelement eine wesentliche Bedeutung zu.

Im Allgemeinen werden die Betätiger des Befehls- und Meldegeräts in einer Fronttafelbohrung montiert, so dass der Betätiger aus der Fronttafel herausragt. Es gibt jedoch auch Varianten, die bündig zur Frontplatte eingebaut werden und die einem vertieften Einbau unterliegen. Dabei werden folgende Montageschritte durchlaufen: der Betätiger wird in die Fronttafelbohrung gesteckt; es erfolgt eine Vorfixierung, bei der der Betätiger in der Bohrung leicht fixiert wird, damit der Halter auf der gegenüberliegenden Seite montiert werden kann; abschließend wird der Halter fest fixiert, damit der Betätiger fest in der Fronttafel sitzt. Durch die Variantenvielfalt und die technischen Anforderungen der Befehls- und Meldegeräte ist es erforderlich, auch den vertieften Einbau über das gesamte Produktspektrum mitanzubieten.

Auf dem Markt gibt es dazu unterschiedliche Lösungen, wobei es sich immer um eine zusätzliche Produktvariante handelt. Dies zeigt sich dadurch, dass es sich entweder um ein eigenes Halter- und Befestigungssystem handelt oder dass die Schaltkontaktübertragung anders ausgeführt ist. Außerdem werden teilweise auch nicht alle Systemanforderungen, wie zum Beispiel die IP-Schutzarten der Grundbaureihe erfüllt.

Die FR 2 388 471 A7 offenbart eine Rosette mit Frontring und Mitteln zu ihrem Verspannen an einer Frontplatte.

Die FR 2 442 500 A1 offenbart Steuer- und Signalgeräte für Schalttafeln mit Druckknopf.

Die WO 2012/110274 A1 offenbart ein elektrisches Befehls- oder Meldegerät, wie einen Drucktaster und Befestigungsmitteln zum Montieren des Drucktasters in einer Wand.

Die DE 196 36 706 C1 offenbart ein elektrisches Befehls- oder Meldegerät, beispielsweise einen Drucktaster zur Befestigung an einer Schalttafel mittels Gewindering.

Demgemäß besteht die Aufgabe der vorliegenden Erfindung darin, ein Befehls- und Meldegerät für den vertieften Frontplatteneinbau zu schaffen, welches auf den Systemkomponenten eines exponierten Frontplatteneinbaus eines Befehls- und Meldegeräts basiert.

Diese Aufgabe wird erfindungsgemäß durch ein Befehls- und Meldegerät mit den Merkmalen des Patentanspruchs 1 gelöst. Weitere Ausführungsbeispiele der Erfindung ergeben sich aus den Unteransprüchen, der Beschreibung sowie der Zeichnung.

Erfindungsgemäß wird diese Aufgabe durch ein Befehls- und Meldegerät mit vertieftem Frontplatteneinbau gelöst mit einem Betätiger, welcher einen zylindrischen Grundkörper und einen Druckknopf aufweist, mit einer Frontplatte, durch welche der zylindrische Grundkörper des Betätigers geführt ist und welche bündig mit dem Druckknopf des Betätigers abschließt, und mit einem Halter, welcher am zylindrischen Grundkörper des Betätigers befestigt ist. Die Erfindung zeichnet sich dabei dadurch aus, dass zwischen Frontplatte und Halter ein Adapterteil auf den zylindrischen Grundkörper des Betätigers aufgesetzt ist, das als Abstandshalter zwischen Frontplatte und Halter ausgebildet ist, so dass der Druckknopf des Betätigers bündig mit der Frontplatte abschließt.

Der Grundgedanke der Erfindung besteht darin, dass durch Einsatz eines Zusatzteils, das heißt des Adapterteils, es ermöglicht wird, dass alle Systemanforderungen erfüllt werden. Dies wird dadurch erreicht, dass alle Systemkomponenten, zum Beispiel der Drucktaster oder der Halter, eins zu eins oder in einer Grundvariante übernommen werden können und die daraus resultierenden Schnittstellen am Adapterteil angepasst werden. So kann zum Beispiel die Erdung und auch der Verdrehschutz gewährleistet werden, indem über das Zusatzteil die Spannkraft an die Fronttafel übertragen wird, so dass alle technisch erforderlichen Anforderungen für den vertieften Einbau hinter der Fronttafel von der Grundmodellreihe übernommen werden können. So können auch alle Betätiger und deren Grundbauformen komplett für den vertieften Einbau genutzt werden. Dabei ist auch vorgesehen, dass der Halter durch die Seitenwände des Zusatzteils positioniert und in Lage gehalten wird.

Der Kern der Erfindung besteht darin, dass bereits bei der Entwicklung der Grundvariante, hier insbesondere der Systemschnittstellen, die Anforderungen für den Einbau vor der Fronttafel auf die Anforderungen für den vertieften Einbau mit eingeflossen sind. Grundlage der Erfindung ist der Einsatz eines Zusatzteils, das heißt eines Adapterteils, welches alle Systemanforderungen erfüllt. Dies wird dadurch erreicht, dass alle Systemkomponenten eins zu eins übernommen werden können, und die daraus resultierenden Schnittstellen am Zusatzteil angepasst werden. Erfindungsgemäß werden die Erdung, die Spannkraft und auch der Verdrehschutz über das Zusatzteil an die Fronttafel übertragen, so dass alle technisch erforderlichen Anforderungen für den vertieften Einbau hinter der Fronttafel von der Grundmodellreihe übernommen werden können. Somit können auch alle Betätiger und deren Grundbauformen komplett für den vertieften Einbau verwendet werden.

Dieses Zusatzteil besteht vorzugsweise aus einem leitenden Grundwerkstoff wie zum Beispiel Zinkdruckguss, der mit Verdrehschutzspitzen versehen werden kann. Diese sind so ausgeformt, dass sie ein Verdrehen des Betätigers in der Frontplatte nach dem Befestigen mit dem Halter verhindern. Dies wird einerseits durch die Geometrie und andererseits durch die Härte des Spitzenwerkstoffs erreicht. Diese Verdrehschutzspitzen können sowohl eingeschraubt, eingepresst oder mit einem anderen Verfahren in das Zusatzteil eingebracht werden.

Da sich beim vertieften Einbau das ganze System nach unten in Richtung Fronttafel verschiebt, wird der Abstand vom Halter zur Fronttafel so groß, dass die Befestigung des Betätigers mit dem Halter ohne das Zusatzteil nicht möglich wäre. Das Zusatzteil übernimmt Teilaufgaben des Halters, zum Beispiel den Verdrehschutz oder die Erdung. Bei der vorgeschlagenen Lösung benötigt der Kunde kein zusätzliches Befestigungssystem.

In einem besonders vorteilhaften Ausführungsbeispiel der Erfindung kann es vorgesehen sein, dass das Adapterteil eine Durchbohrung aufweist, durch welche der zylindrische Grundkörper des Betätigers geführt ist. Das erfindungsgemäße Adapterteil stellt quasi eine Verlängerung des Halters dar und benötigt daher auch eine vorzugsweise zylindrisch ausgeformte Ausnehmung, um den zylindrischen Grundkörper des Betätigers aufnehmen zu können, damit dieser so weit versenkt werden kann, dass der Drucktaster bündig mit der Fronttafel abschließt.

Erfindungsgemäß ist vorgesehen, dass das Adapterteil mindestens eine Verdrehschutzspitze aufweist. Diese Verdrehschutzspitzen sind so ausgeformt, dass sie ein Verdrehen des Betätigers in der Frontplatte nach dem Befestigen mit dem Halter verhindern. Diese Verdrehschutzspitzen können sowohl eingeschraubt, eingepresst oder mit einem anderen Verfahren in das Zusatzteil eingebracht werden.

In einer weiteren Ausgestaltung der Erfindung kann es vorgesehen sein, dass am Adapterteil Verbindungsmittel angeordnet sind, die den Halter positionieren und am Adapter befestigen. Der Halter wird durch diese Verbindungsmittel des Adapterteils positioniert und in der Lage gehalten, so dass die Zuordnung zwischen Halter und Adapterteil einfach möglich ist.

Es kann einem weiteren Konzept der Erfindung entsprechen, wenn das Adapterteil aus Zinkdruckguss gefertigt ist. Zinkdruckguss ist ein leitender Grundwerkstoff, aus welchem auf einfache Art und Weise auch die Verdrehschutzspitzen angeformt werden können.

Das erfindungsgemäße Befehls- und Meldegerät mit vertieftem Frontplatteneinbau weist einen Betätiger auf, welcher mit einem zylindrischen Grundkörper und einem Druckknopf versehen ist. Das Befehls- und Meldegerät weist zudem eine Frontplatte auf, durch welche der zylindrische Grundkörper des Betätigers geführt ist und welche bündig mit dem Druckknopf des Betätigers abschließt. Außerdem weist das Befehls- und Meldegerät einen Halter auf, welcher am zylindrischen Grundköprer des Betätigers befestigt ist. Zwischen Frontplatte und Halter ist ein erfindungsgemäßes Adapterteil auf den zylindrischen Grundkörper des Betätigers aufgesetzt, der als Abstandshalter zwischen Frontplatte und Halter ausgebildet ist. Das erfindungsgemäße Adapterteil weist vorzugsweise eine Durchbohrung auf, durch welche der zylindrische Grundkörper des Betätigers geführt ist. Das erfindungsgemäße Adapterteil weist mindestens eine Verdrehschutzspitze auf, die so ausgeformt ist, dass sie ein Verdrehen des Betätigers in der Frontplatte nach dem Befestigen des Halters verhindert. Des Weiteren weist das erfindungsgemäße Adapterteil vorzugsweise Verbindungsmittel auf, die den Halter positionieren und am Adapterteil befestigen. Das erfindungsgemäße Adapterteil ist vorzugsweise aus Zinkdruckguss gefertigt.

Die Erfindung zeichnet sich dadurch aus, dass bereits bei der Entwicklung der Grundvariante die Anforderungen für den Einbau vor der Fronttafel, also für einen exponierten Fronttafeleinbau, auf die Anforderungen für den vertieften Einbau mit eingeflossen sind. Grundlage der Erfindung ist dabei ein Adapterteil, welches alle Systemanforderungen erfüllt. Durch die Verwendung dieses erfindungsgemäßen Adapterteils wird erreicht, dass alle Systemkomponenten eins zu eins übernommen werden können und die daraus resultierenden Schnittstellen am Adapterteil angepasst werden. So werden zum Beispiel die Erdung, die Spannkraft und auch der Verdrehschutz über das Adapterteil an die Fronttafel übertragen, so dass alle technisch erforderlichen Anforderungen für den vertieften Einbau hinter der Fronttafel von der Grundmodellreihe übernommen werden können. Somit können auch alle Betätiger oder deren Grundbauformen komplett für den vertieften Einbau verwendet werden.

Weiter Vorteile und Ausführungen der Erfindung werden nachfolgend anhand eines Ausführungsbeispiels sowie anhand der Zeichnung erläutert.

Dabei zeigen schematisch:
Fig. 1 in einer perspektivischen Explosionsdarstellung ein erfindungsgemäßes Befehls- und Meldegerät mit Adapterteil;
Fig. 2 in einer Seitenansicht das erfindungsgemäße Befehls- und Meldegerät nach Fig. 1 im zusammengebauten Zustand;
Fig. 3 in einer Schnittdarstellung das erfindungsgemäße Befehls- und Meldegerät im zusammengebauten Zustand.

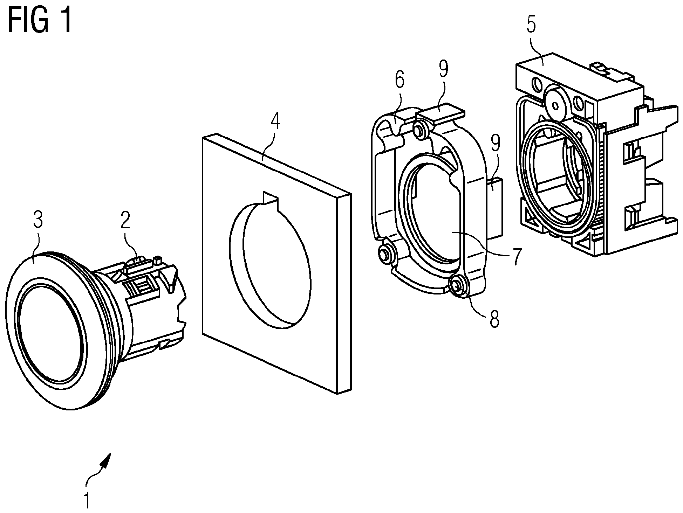

Fig. 1 zeigt ein erfindungsgemäßes Befehls- und Meldegerät mit vertieftem Frontplatteneinbau. Das erfindungsgemäße Befehls- und Meldegerät mit vertieftem Frontplatteneinbau weist einen Betätiger 1 auf, welcher einen zylindrischen Grundkörper 2 und einen Druckknopf 3 aufweist. Das Befehls- und Meldegerät weist zudem eine Frontplatte 4 auf, durch welche der zylindrische Grundkörper 2 des Betätigers 1 geführt ist und welche bündig mit dem Druckknopf 3 des Betätigers 1 abschließt. Außerdem weist das Befehls- und Meldegerät einen Halter 5 auf, welcher am zylindrischen Grundkörper 2 des Betätigers 1 befestigt ist. Zwischen Frontplatte 4 und Halter 5 ist ein erfindungsgemäßes Adapterteil 6 auf den zylindrischen Grundkörper 2 des Betätigers 1 aufgesetzt, der als Abstandshalter zwischen Frontplatte 4 und Halter 5 ausgebildet ist.

Das erfindungsgemäße Adapterteil 6 weist vorzugsweise eine Durchbohrung 7 auf, durch welche der zylindrische Grundkörper 2 des Betätigers 1 geführt ist. Das erfindungsgemäße Adapterteil 6 weist mindestens eine Verdrehschutzspitze 8 auf, die so ausgeformt ist, dass sie ein Verdrehen des Betätigers 1 in der Frontplatte 4 nach dem Befestigen des Halters 5 verhindert. Des Weiteren weist das erfindungsgemäße Adapterteil 6 vorzugsweise Verbindungsmittel 9 auf, die den Halter 5 positionieren und am anderen Adapterteil 6 befestigen. Das erfindungsgemäße Adapterteil 6 ist vorzugsweise aus Zinkdruckguss gefertigt.

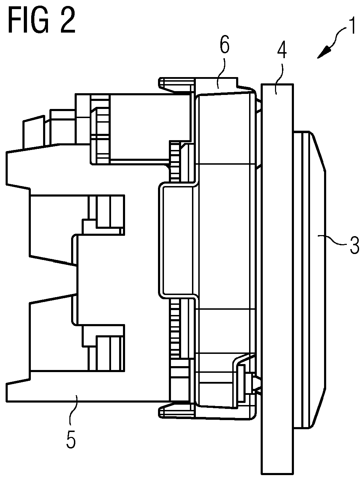

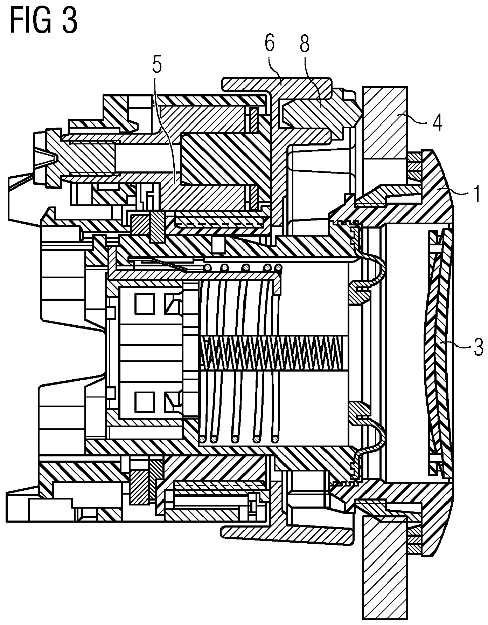

In Fig. 2 ist das erfindungsgemäße Befehls- und Meldegerät nach dem Zusammenbau dargestellt. Es geht aus Fig. 2 hervor, dass der Druckknopf 3 des Betätigers 1 bündig mit der Frontplatte 4 abschließt. Der zylindrische Grundkörper 2 des Betätigers 1 ist demnach im Adapterteil 6 und im Halter 5 versenkt. Aus Fig. 3 geht diese Darstellung in der Schnittdarstellung hervor.

Die Erfindung zeichnet sich dadurch aus, dass bereits bei der Entwicklung der Grundvariante die Anforderungen für den Einbau vor der Fronttafel, also für einen exponierten Fronttafeleinbau, auf die Anforderungen für den vertieften Einbau mit eingeflossen sind. Grundlage der Erfindung ist dabei ein Adapterteil, welches alle Systemanforderungen erfüllt. Durch die Verwendung dieses erfindungsgemäßen Adapterteils wird auch erreicht, dass alle Systemkomponenten eins zu eins übernommen werden können und die daraus resultierenden Schnittstellen am Adapterteil angepasst werden. So werden zum Beispiel die Erdung, die Spannkraft und auch der Verdrehschutz über das Adapterteil an die Fronttafel übertragen, so dass alle technisch erforderlichen Anforderungen für den vertieften Einbau hinter der Fronttafel von der Grundmodellreihe übernommen werden können. Somit können auch alle Betätiger oder deren Grundbauformen komplett für den vertieften Einbau verwendet werden.

## Patentansprüche

1. Befehls- und Meldegerät mit vertieften Frontplatteneinbau aufweisend:
- einen Betätiger (1), welcher einen zylindrischen Grundkörper (2) und einen Druckknopf (3) aufweist,
- eine Frontplatte 4, durch welche der zylindrische Grundkörper (2) des Betätigers (1) geführt ist und welche bündig mit dem Druckknopf (3) des Betätigers (1) abschließt und
- einen Halter (5), welcher am zylindrischen Grundkörper (2) des Betätigers (1) befestigt ist, wobei
- zwischen Frontplatte (4) und Halter (5) ein Adapterteil (6) auf den zylindrischen Grundkörper (2) des Betätigers (1) aufgesetzt ist, das als Abstandshalter zwischen Frontplatte (4) und Halter (5) ausgebildet ist, so dass der Druckknopf (3) des Betätigers (1) bündig mit der Frontplatte (4) abschließt, wobei
- das Adapterteil (6) derartige Schnittstellen aufweist, dass eine Erdung, eine Spannkraft und ein Verdrehschutz über das Adapterteil (6) an die Frontplatte (4) übertragbar ist, wobei
- das Adapterteil (6) mindestens eine Verdrehschutzspitze (8) aufweist, die so ausgeformt ist, dass sie ein Verdrehen des Betätigers (1) in der Frontplatte (4) nach dem Befestigen mit dem Halter (5) verhindert, **dadurch gekennzeichnet, dass** die mindestens eine Verdrehschutzspitze (8) in das Adapterteil (6) eingeschraubt oder eingepresst ist.

2. Befehls- und Meldegerät nach Anspruch 1, **dadurch gekennzeichnet, dass** das Adapterteil (6) eine Durchbohrung (7) aufweist, durch welche der zylindrische Grundkörper (2) des Betätigers (1) geführt ist.

3. Befehls- und Meldegerät nach einem der Ansprüche 1 bis 2, **dadurch gekennzeichnet, dass** am Adapterteil (6) Verbindungsmittel (9) angeordnet sind, die den Halter (5) positionieren und am Adapterteil (6) befestigen.

4. Befehls- und Meldegerät nach einem der Ansprüche 1 bis 3, **dadurch gekennzeichnet, dass** das Adapterteil (6) aus Zinkdruckguss gefertigt ist.

## Claims

1. Command and signalling device with recessed front plate installation, having:
- an actuator (1), which has a cylindrical main body (2) and a pushbutton (3),
- a front plate (4), through which the cylindrical main body (2) of the actuator (1) is led and which ends flush with the pushbutton (3) of the actuator (1), and
- a holder (5), which is fixed to the cylindrical main body (2) of the actuator (1), wherein
- between the front plate (4) and the holder (5), an adapter part (6) which is designed as a spacer between the front plate (4) and the holder (5) is placed on the cylindrical main body (2) of the actuator (1), so that the pushbutton (3) of the actuator (1) ends flush with the front plate (4),
wherein
- the adapter part (6) has interfaces such that an earth, a clamping force and anti-twist protection can be transmitted to the front plate (4) via the adapter part (6), wherein
- the adapter part (6) has at least one anti-twist tip (8), which is shaped in such a way that it prevents rotation of the actuator (1) in the front plate (4) after being fixed to the holder (5),
**characterized in that**
the at least one anti-twist tip (8) is screwed or pressed into the adapter part (6).

2. Command and signalling device according to Claim 1, **characterized in that** the adapter part (6) has a through hole (7), through which the cylindrical main body (2) of the actuator (1) is led.

3. Command and signalling device according to either of Claims 1 and 2, **characterized in that** connecting means (9) which position the holder (5) and fix it to the adapter part (6) are arranged on the adapter part (6).

4. Command and signalling device according to one of Claims 1 to 3, **characterized in that** the adapter part (6) is made of diecast zinc.

## Revendications

1. Dispositif de commande et de visualisation encastré dans un panneau avant présentant :
- un actionneur (1) qui présente un corps cylindrique (2) et un bouton-poussoir (3),
- une plaque avant (4) à travers laquelle on fait passer le corps cylindrique (2) de l'actionneur (1) et qui affleure le bouton-poussoir (3) de l'actionneur (1) et
- un support (5) fixé au corps cylindrique (2) de l'actionneur (1), dans lequel
- une pièce adaptatrice (6) est disposée entre la plaque avant (4) et le support (5) sur le corps cylindrique (2) de l'actionneur (1), qui est constituée comme une pièce d'espacement entre la plaque avant (4) et le support (5), de sorte que le bouton-poussoir (3) de l'actionneur (1) affleure la plaque avant (4),
dans lequel
- la pièce adaptatrice (6) présente des interfaces telles que l'on puisse transmettre une liaison à la terre, une force de serrage et une protection contre la torsion à la plaque avant (4) via la pièce adaptatrice (6),
- la pièce adaptatrice (6) présentant au moins une pointe de protection contre la torsion (8) dont la forme garantit qu'elle empêche une rotation de l'actionneur (1) dans la plaque avant (4) après sa fixation avec le support (5),
**caractérisé en ce que** l'au moins une pointe de protection contre la torsion (8) est vissée ou sertie dans la pièce adaptatrice (6).

2. Dispositif de commande et de visualisation selon la revendication 1, **caractérisé en ce que** la pièce adaptatrice (6) présente un orifice (7) à travers lequel on fait passer le corps cylindrique (2) de l'actionneur (1).

3. Dispositif de commande et de visualisation selon la revendication 1 à 2, **caractérisé en ce que** des éléments de fixation (9) sont disposés sur la pièce adaptatrice (6), qui positionnent le support (5) et le fixent à la pièce adaptatrice (6).

4. Dispositif de commande et de visualisation selon l'une des revendications 1 à 3, **caractérisé en ce que** la pièce adaptatrice (6) est constituée de zinc moulé sous pression.
